# FASCICULE DE BREVET EUROPEEN

(11) **EP 0 991 552 B1**
(45) Date de publication et mention de la délivrance du brevet: **30.07.2003**
(21) Numéro de dépôt: 98933749.8
(22) Date de dépôt: 29.06.1998
(51) Int. Cl.: B60R 22/26, A44B 11/25

(54) **DISPOSITIF DE BOUCLAGE DE CEINTURE DE SECURITE, NOTAMMENT POUR SIEGE DE VEHICULE AUTOMOBILE**
SCHLOSSVORRICHTUNG FÜR EINEN SICHERHEITSGURT, INSBESONDERE FÜR EINEN FAHRZEUGSITZ
DEVICE FOR FASTENING A SAFETY BELT, IN PARTICULAR FOR A MOTOR VEHICLE SEAT

(30) Priorité: 30.06.1997 FR 9708208
(43) Date de publication de la demande: 12.04.2000
(73) Titulaire: Renault s.a.s., 92100 Boulogne Billancourt (FR)
(72) Inventeur: VELAY, Michel, F-78640 Saint Germain de la Grange (FR); CHAMOUARD, François, F-78960 Voisins le Bretonneux (FR); FROC, Laurent, F-78170 La Celle Saint Cloud (FR)
(86) Numéro de dépôt international: FR9801382
(87) Numéro de publication internationale: WO99001318

(56) Documents cités:
- DE-A- 3 110 689
- DE-A- 3 439 076
- FR-A- 2 408 360
- US-A- 4 400 015
- PATENT ABSTRACTS OF JAPAN vol. 096, no. 008, 30 août 1996 & JP 08 091173 A (NISSAN MOTOR CO LTD), 9 avril 1996

## Description

La présente invention est relative à un dispositif de bouclage de ceinture de sécurité et, plus particulièrement, à un tel dispositif conçu pour équiper un siège de véhicule automobile, ce dispositif comprenant une boucle et un pêne manuellement verrouillables l'un à l'autre ou déverrouillables l'un de l'autre, l'un de ces organes étant solidaire d'une sangle et l'autre d'un plancher du véhicule.

Les dispositifs de bouclage de ce type, notamment ceux installés sur la banquette arrière d'un véhicule automobile, comporte une boucle qui affleure à la surface de l'assise de la banquette de manière à pouvoir être saisie par la main d'un usager. Elle est raccordée au plancher du véhicule par l'intermédiaire de l'un quelconque des divers moyens connus, tringle, lame, etc... comme décrit par exemple dans les demandes de brevets FR-A-2 443 846 et FR-A-2 707 939 qui comporte les caractéristiques du préambule de la revendication 1. Elle sert à bloquer un pêne coulissant sur une sangle fixée au véhicule à ses deux extrémités, de manière à constituer pour celle-ci un troisième point d'ancrage, entre une partie de sangle s'appuyant sur le thorax de l'usager et une autre partie de sangle s'appuyant sur le bassin de celui-ci.

La boucle débordant de la surface supérieure de l'assise de la banquette constitue une gêne pour les usagers de cette banquette, aussi bien lors de leur installation sur celle-ci qu'une fois cette installation faite. En particulier, quand la banquette est occupée par trois passagers, celui qui occupe la position centrale est particulièrement incommodé par les boucles débordant de la banquette, de part et d'autre de la surface, généralement étroite, de celle-ci sur laquelle il est assis.

La présente invention a précisément pour but de réaliser un dispositif de bouclage de ceinture de sécurité propre à améliorer le confort des passagers de la banquette arrière d'un véhicule automobile.

On atteint ce but de l'invention dans la revendication 1.

Suivant un mode de réalisation préféré de l'invention, le dispositif comprend un puits affleurant à la surface de l'assise du siège et traversant l'épaisseur de l'assise pour guider l'organe solidaire de la sangle vers l'organe solidaire du plancher lors du bouclage de la ceinture, ainsi facilité par la présence de ce puits.

D'autres caractéristiques et avantages de la présente invention apparaîtront à la lecture de la description qui va suivre et à l'examen du dessin annexé dans lequel :
- la figure 1 représente une banquette arrière de véhicule automobile, conçues pour être équipée du dispositif de bouclage de ceinture de sécurité suivant l'invention,
- la figure 2A est un schéma en coupe transversale d'un premier mode de réalisation du dispositif suivant l'invention et la figure 2B représente en détail le pêne formant partie de ce dispositif, et
- la figure 3 est un schéma en coupe transversale d'un deuxième mode de réalisation du dispositif suivant l'invention.

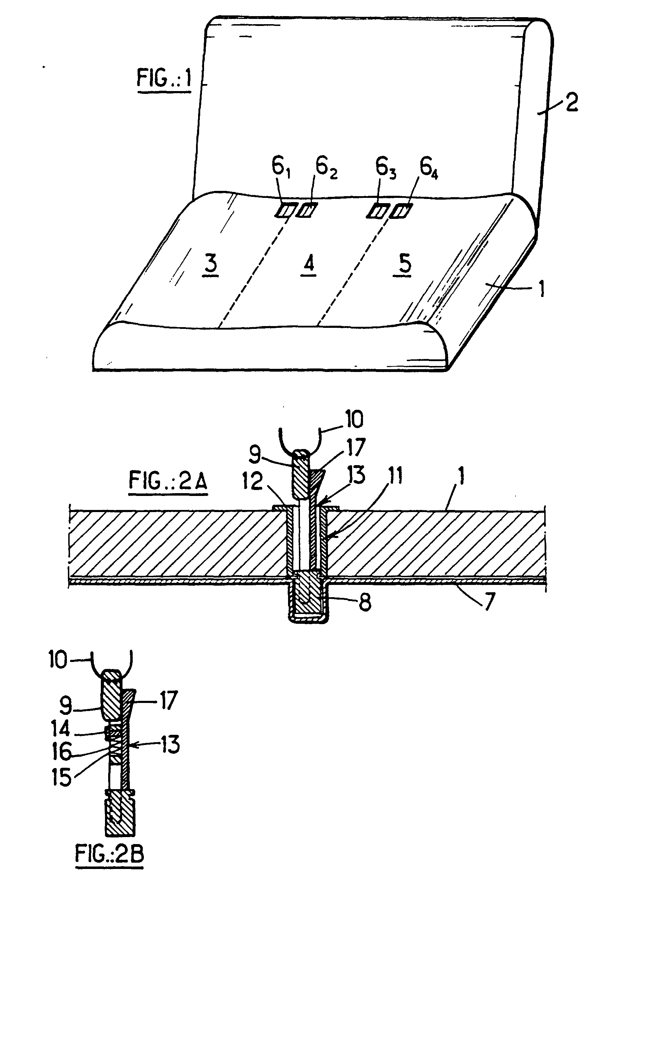

On se réfère au dessin annexé où la figure 1 représente une banquette arrière de véhicule automobile, constituant un siège comprenant une assise 1 et un dossier 2. Une telle banquette peut recevoir concurremment jusqu'à deux ou trois personnes sur les emplacements de l'assise référencés 3,4 et 5. Les exigences légales en matière de sécurité imposent la présence de ceintures de sécurité pour les passagers de la banquette. Celles-ci sont classiquement constituées par une sangle fixée, à chacune de ses extrémités, au bâti du véhicule. Entre ses deux extrémités, la sangle comprend un organe coulissant, pêne ou boucle, conçu pour coopérer avec un autre organe, boucle ou pêne respectivement, raccordé au plancher du véhicule et accessible au niveau d'une des plages 6₁ à 6₄ du siège. Les deux organes complémentaires peuvent être engagés manuellement l'un dans l'autre pour définir un troisième point d'ancrage de la sangle, entre une partie de celle-ci s'appuyant sur le thorax d'un passager et une autre partie s'appuyant sur le bassin de celui-ci. Toutes ces dispositions sont bien connues et il n'est donc pas nécessaire de les décrire ici plus en détail.

Classiquement, les organes qui se trouvent au niveau des plages 6ᵢ sont des boucles d'un volume assez important, qui débordent de ces plages. Elles sont gênantes pour les passagers assis sur la banquette, notamment celle qui occupe l'emplacement 4, souvent assez étroit, et ceci aussi bien lors de leur installation sur cette banquette qu'après celle-ci, ceintures bouclées sur les thorax et bassins de ces passagers.

Suivant la présente invention, on améliore le confort des usagers de la banquette en bouclant la ceinture sur une boucle, fixé au plancher 7 du véhicule (voir figure 2A), sous l'assise 1 de la banquette, dans une position où elle ne peut affleurer à la surface de cette assise. Dans le mode de réalisation du dispositif de bouclage suivant l'invention représenté aux figures 2A et 2B, cet organe est une boucle 8 sertie, par exemple, dans le plancher 7. Cette boucle 8 est accessible, pour un pêne où pédoncule 9 coulissant sur une sangle 10, à travers un puits 11 s'étendant, à travers l'épaisseur de l'assise 1, de la boucle 8 à la surface supérieure de l'assise. Le pêne 9 doit alors être sensiblement plus long qu'un pêne ou pédoncule classique. Avantageusement, le débouché du puits 11 sur cette surface est ceinturé d'une collerette 12 qui signale l'entrée du puits pour le passager. Le puits est réalisé en une matière assez rigide pour guider fermement le pêne 9 vers la boucle 8. Il est maintenu au-dessus de celle-ci par la matière du siège lui-même, une mousse de matière plastique par exemple.

Classiquement la boucle comprend une dent chargée élastiquement qui pénètre dans une ouverture (non représentée) percée dans le pêne pour retenir celui-ci. La boucle comporte alors un moyen de déverrouillage du pêne, par escamotage de la dent, actionné manuellement pour détacher le pêne de la boucle. Cet actionnement s'opère par pression sur une touche accessible sur la boucle. Une telle solution n'est plus possible dans le dispositif de la figure 2A puisque la boucle 8 n'est pas accessible pour la main d'un passager.

Suivant l'invention, on surmonte cette difficulté en reportant le moyen de déverrouillage sur le pêne 9. Ce moyen peut prendre, comme représenté à la figure 2B, la forme d'une barrette 13 montée à coulissement sur le pêne 9, par l'intermédiaire d'au moins un ergot 14 coulissant dans une boutonnière axiale 15 découpée dans le pêne 9, où l'ergot est chargé par un ressort 16 contre une extrémité de la boutonnière 15. Une touche 17 permet d'écarter l'ergot 14 et la barrette 13 de cette position, quand le pêne est engagé dans la boucle, pour dégager la dent de retenue dudit pêne 9 dans la boucle 8 et permettre ainsi la séparation du pêne et de la boucle, ce qui permet au passager de se dégager de la sangle 10.

On comprend que, grâce au dispositif suivant l'invention, le siège 1 reste dégagé de tout obstacle proéminent quand les ceintures sont détachées, ce qui facilité l'installation des passagers et accroît leur confort, y compris après bouclage des ceintures.

La présente invention présente d'autres avantages. C'est ainsi que le point de fixation de la sangle 10 (au niveau de son passage dans le pêne 9) est abaissé par rapport à sa position classique, ce qui diminue le risque de "sous-marinage" du passager ceinturé, en cas de choc.

Lorsqu'on rabat le dossier 2 sur l'assise 1 de la banquette pour accroître le volume du coffre du véhicule, aucun organe en saille sur cette assise ne vient gêner ce rabattement.

Dans certains véhicules, on bascule l'assise 1 avant de rabattre le dossier 2 pour accroître encore le volume utilisable. Lorsqu'on ramène ensuite l'assise dans sa position normale, les puits reviennent automatiquement dans l'axe des boucles.

Bien entendu, l'invention n'est pas limitée aux modes de réalisation décrits et représentés qui n'ont été donnés qu'à titre d'exemple. C'est ainsi que le dispositif suivant l'invention peut équiper des sièges autres que de véhicules automobiles. De même, le pêne à barrette 13 de déverrouillage de la figure 2B pourrait aussi faire partie d'un dispositif de bouclage dans lequel la boucle déborde classiquement au-dessus de l'assise du siège. Dans ce cas, cette boucle peut être dépourvue de moyens de déverrouillage, ceux-ci étant reportés sur le pêne solidaire de la sangle.

## Revendications

1. Dispositif de bouclage de ceinture de sécurité, notamment pour siège (1,2) de véhicule automobile, du type comprenant une boucle (8) et un pêne (9) manuellement verrouillables l'un à l'autre et déverrouillables l'un de l'autre, le pêne (9) étant monté coulissant sur une sangle (10) et la boucle (8) étant solidaire d'un plancher (7) du véhicule, **caractérisé en ce que** le pêne (9) porte un moyen de déverrouillage (13) de l'ensemble boucle (8)/pêne (9) assemblé.

2. Dispositif conforme à la revendication 1, **caractérisé en ce que** ledit moyen de déverrouillage est constitué par une barrette (13) montée à coulissement sur ledit pêne (9) et chargée élastiquement vers une position inactive, ladite barrette (13) pouvant être manuellement poussée vers sa position active de déverrouillage.

3. Dispositif conforme à l'une quelconque des revendications 1 et 2, **caractérisé en ce que** la boucle (8), solidaire du plancher (7) du véhicule, est entièrement escamotée sous la surface de l'assise (1) du siège (1,2).

4. Dispositif conforme à la revendication 3, **caractérisé en ce qu'**il comprend un puits affleurant à la surface de l'assise (1) du siège (1,2) et traversant l'épaisseur de l'assise (1) pour guider le pêne (9) vers la boucle (8).

5. Dispositif conforme à la revendication 4, **caractérisé en ce qu'**il comprend un moyen (12) pour rendre visible le débouché dudit puits (11) sur la surface supérieure de l'assise (1) du siège (1,2).

6. Dispositif conforme à l'une quelconque des revendications 1 à 5, **caractérisé en ce qu'**il est installé entre la partie thoracique et la partie de bassin de ladite sangle.

7. Ceinture de sécurité, équipée d'un dispositif de bouclage conforme à l'une quelconque des revendications 1 à 6.

## Patentansprüche

1. Vorrichtung zum Schließen eines Sicherheitsgurtes, insbesondere für den Sitz (1 2) eines Kraftfahrzeuges, die eine Schließe (8) und eine Klinke (9) aufweist, die manuell miteinander verriegelbar und voneinander entriegelbar sind, wobei die Klinke (9) gleitend an einem Gurtband (10) angeordnet ist und die Schließe (8) fest mit dem Boden (7) des Fahrzeuges verbunden ist, **dadurch gekennzeichnet, dass** die Klinke (9) mit einer Anordnung (13) zur Entriegelung der miteinander verriegelten Schließe (8)/Klinke (9) versehen ist.

2. Vorrichtung nach Anspruch 1, **dadurch gekennzeichnet, dass** die Anordnung zur Entriegelung aus einem Stab (13) besteht, der gleitend an der Klinke (9) angeordnet ist und elastisch in Richtung einer inaktiven Stellung vorgespannt ist und der manuell in seine aktive Stellung der Entriegelung überführbar ist.

3. Vorrichtung nach einem der Ansprüche 1 und 2, **dadurch gekennzeichnet, dass** die Schließe (8), die fest mit dem Boden (7) des Fahrzeuges verbunden ist, vollständig unterhalb der Sitzoberfläche (1) des Sitzes (1, 2) angeordnet ist.

4. Vorrichtung nach Anspruch 3, **dadurch gekennzeichnet, dass** sie einen Schacht aufweist, der mit der Sitzoberfläche (1) des Sitzes (1, 2) fluchtet und die gesamte Dicke des Sitzes (1) durchsetzt zur Führung der Klinke (9) zur Schließe (8) hin.

5. Vorrichtung nach Anspruch 4, **dadurch gekennzeichnet, dass** sie eine Anordnung (12) aufweist um die Mündung des Schachtes (11) auf der Sitzoberfläche (1) des Sitzes (1, 2) sichtbar zu machen.

6. Vorrichtung nach einem der Ansprüche 1 bis 5, **dadurch gekennzeichnet, dass** sie zwischen dem Abschnitt für den Oberkörper und dem Abschnitt für das Becken des Gurtbandes eingesetzt ist.

7. Sicherheitsgurt, der mit einer Vorrichtung zum Schließen nach einem der Ansprüche 1 bis 6 ausgerüstet ist

## Claims

1. Device for buckling a safety belt, particularly for a seat (1, 2) of an automotive vehicle, of the type comprising a buckle (8) and a bolt (9) manually lockable one to the other and that can be unlocked one from the other, the bolt (9) being mounted in a sliding manner on a strap (10), and the buckle (8) being integral with a floor (7) of the vehicle, **characterised in that** the bolt (9) carries an unlocking means (13) for the buckle (8)/bolt (9) assembly.

2. Device according to claim 1, **characterised in that** said unlocking means is constituted by a bar (13) mounted in a sliding manner on said bolt (9) and elastically tensioned towards an inactive position, said bar (13) being able to be pushed manually towards its active unlocking position.

3. Device according to any one of claims 1 and 2, **characterised in that** the buckle (8) integral with the floor (7) of the vehicle is completely retracted under the surface of the squab (1) of the seat (1, 2).

4. Device according to claim 3, **characterised in that** it comprises a well rising to the surface of the squab (1) of the seat (1, 2) and passing through the thickness of the seat (1) in order to guide the bolt (9) towards the buckle (8).

5. Device according to claim 4, **characterised in that** if comprises a means (12) for making visible the opening of said well (11) on the upper surface of the squab (1) of the seat (1, 2).

6. Device according to any one of claims 1 to 5, **characterised in that** it is installed between the chest part and the pelvic part of said strap.

7. Safety belt fitted with the buckling device according to any one of claims 1 to 6.
